# FASCICULE DE BREVET EUROPEEN

(11) **EP 1 596 652 B1**
(45) Date de publication et mention de la délivrance du brevet: **27.09.2006**
(21) Numéro de dépôt: 04713104.0
(22) Date de dépôt: 20.02.2004
(51) Int. Cl.: A01K 5/00

(54) **MACHINE MELANGEUSE DISTRIBUTRICE EN PARTICULIER DE PRODUITS POUR L ALIMENTATION DU BETAIL**
MISCH- UND VERTEILANLAGE, INSBESONDERE FÜR VIEHFUTTER
MACHINE FOR MIXING AND DISTRIBUTING PRODUCTS, IN PARTICULAR PRODUCTS USED TO FEED LIVESTOCK

(30) Priorité: 20.02.2003 FR 0302106
(43) Date de publication de la demande: 23.11.2005
(73) Titulaire: Lucas G, 85130 La Verrie (FR)
(72) Inventeur: LUCAS, Gérard, F-85130 La Verrie (FR); RETAILLAUD, Jean-Claude, F-85130 La Verrie (FR)
(74) Mandataire: Michelet, Alain
(86) Numéro de dépôt international: PCT/FR2004/050070
(87) Numéro de publication internationale: WO 2004/075632

(56) Documents cités:
- EP-A- 0 562 693
- EP-A- 0 793 911
- FR-A- 2 820 952
- US-A- 4 053 071

## Description

La présente invention concerne d'une manière générale une machine mélangeuse distributrice en particulier de produits pour l'alimentation du bétail, comprenant notamment de la paille et/ou du fourrage.

Ce type de machine mélangeuse décrite notamment dans le document US-3,672,640, est formée d'une benne ouverte sur le dessus ; cette benne renferme un rotor de grand diamètre qui s'étend longitudinalement entre les parois d'extrémités et qui est partiellement enveloppé par un fond arrondi en forme d'auge. Ce rotor brasse et mélange les produits qu'il transfère au fur et à mesure sur une vis sans fin disposée latéralement, parallèlement audit rotor, et dont le diamètre est de 3 à 4 fois plus petit que celui de ce dernier.
Cette vis latérale s'étend également entre les deux parois d'extrémités de la benne et elle est également enveloppée partiellement par un fond en forme d'auge ; elle réalise un mouvement longitudinal continu de déplacement des produits d'un bout à l'autre de la benne en allant vers l'extrémité de cette dernière où se situe l'orifice de distribution, de sorte que, lorsque cet orifice est fermé par une trappe appropriée, les produits sont déplacés dans la benne, en circuit fermé, et sont brassés grâce au rotor de mélange.

Ce type de machine effectue seulement le mélange des produits pour l'alimentation du bétail.

Un autre type de machine a donc été développé afin de pouvoir effectuer en plus le déchiquetage et/ou la découpe des produits du genre foin ou paille par exemple.

Ainsi, le document EP-498 543 décrit une machine du type de celle décrite précédemment, comprenant une fonction de découpe des produits grâce à la présence d'une vis de transfert et de découpe, qui permet d'incorporer des produits du genre foin ou paille dans la benne.

Cette vis de transfert dont le diamètre est sensiblement le même que celui de la vis de mélange précitée, est disposée au-dessus de cette dernière, tournant dans le même sens mais avec un pas d'hélice inversé. Elle comporte sur sa périphérie, des couteaux qui permettent d'entraîner et de découper le foin ou la paille. On peut alors obtenir un produit alimentaire constitué de brins découpés de paille ou de foin mélangés avec de la poudre ou des granulés de natures diverses.

De telles machines associent une fonction de mélange des produits à une fonction de découpe de ces derniers.

Des machines mélangeuses distributrices de produits pour l'alimentation de bétail semblables à celle du document EP-498 543 sont également décrites dans les documents FR-2 820 952 et FR-2 820 953.

L'introduction des produits dans ces machines se fait par le dessus de la benne dans une ouverture supérieure de calibre déterminé. Les opérations de chargement nécessitent alors, avec ces machines, l'introduction du fourrage par petites fourchées (généralement 80 kg maximum), avec un déversement précis du produit au travers de l'ouverture supérieure précitée. Le document US-A-4053071 décrit une machine mélangeuse distributrice à changement latéral.

La présente invention vise à remédier à ces inconvénients en proposant une machine mélangeuse distributrice apte à simplifier les opérations de chargement, et aussi susceptible de recevoir des fourchées de fourrage de calibre plus important.

Les buts ci-dessus sont atteints par une machine mélangeuse distributrice de produits, en particulier pour l'alimentation du bétail comprenant notamment de la paille et/ou du foin, suivant la revendication 1, laquelle machine est constituée d'une benne munie d'un fond qui s'étend entre des parois latérales et des parois d'extrémités, lequel fond enveloppe partiellement d'une part, un rotor de mélange de grand diamètre s'étendant longitudinalement jusqu'aux parois d'extrémités, et d'autre part, une vis sans fin de distribution, s'étendant parallèlement audit rotor pour déplacer lesdits produits d'une extrémité à l'autre du fond, en allant vers une trappe de distribution qui est aménagée dans l'une desdites parois latérales à proximité d'une des parois d'extrémités de la benne. Cette vis de distribution est surmontée par une vis de transfert longitudinale qui déplace les produits longitudinalement dans la benne selon un sens inverse à celui induit par la vis de distribution, et qui comporte des moyens pour déchiqueter et/ou découper les produits. Ces vis de distribution et de transfert sont agencées à proximité de l'une des parois latérales de la benne, du côté de l'ouverture de chargement des produits.
Conformément à l'invention, la machine comporte une paroi latérale, à proximité de laquelle se trouvent les vis de distribution et de transfert, dont au moins un tronçon de sa longueur est manoeuvrable en pivotement, par le biais d'un moyen de commande, entre une position de fermeture dans laquelle ledit tronçon constitue au moins une partie de ladite paroi latérale, et une position ouverte dans laquelle l'ouverture de chargement de la benne est augmentée ; ce tronçon mobile est, en outre, muni de flancs latéraux aptes à se déployer ou à se replier en fonction respectivement de la position ouverte ou fermée dudit tronçon.
La présente machine mélangeuse distributrice comporte alors, de manière intéressante, une benne à géométrie variable qui permet un réglage du calibre de l'ouverture de chargement, cela toujours avec une certaine étanchéité pour éviter les pertes de produits.

Selon une première disposition particulière de l'invention, le tronçon articulé forme un e sorte de porte aménagée dans la longueur de la paroi latérale, lequel tronçon est monté pivotant sur ladite paroi latérale autour d'une charnière, aménagée au niveau de sa bordure inférieure, et s'étendant parallèlement à l'axe de la vis de transfert.

De préférence, le tronçon mobile en forme de porte est disposé à l'extrémité arrière de la benne.
Selon cette forme préférée de réalisation, le tronçon mobile s'étend depuis la paroi d'extrémité arrière de la benne jusqu'à la trappe de distribution. Ce tronçon peut encore avoir seulement une largeur légèrement supérieure à celle d'une balle de fourrage.

Selon une seconde disposition particulière de l'invention, la machine comporte une paroi latérale entièrement montée pivotante sur la partie du fond enveloppant la vis de distribution, autour d'un axe d'articulation parallèle à la vis de transfert.

Selon ces dispositions particulières, la paroi latérale comprend au moins un tronçon de sa longueur monté mobile depuis une position ouverte dans laquelle ledit tronçon est apte à recevoir le produit, en particulier sous la forme d'une balle entière, jusqu'à une position fermée dans laquelle pratiquement la totalité de la balle a été déchiquetée et/ou découpée par la vis de transfert.
Dans ce cas, le tronçon présente avantageusement une surface de réception de la balle de forme arquée.

Dans des modes de réalisation particuliers pouvant être pris isolément ou selon toutes leurs combinaisons techniques possibles et présentant chacune des avantages spécifiques :
- le moyen de commande du tronçon mobile est un vérin hydraulique ;
- la machine comprend un peigne à contre-couteaux coopérant avec la vis de transfert en vue du déchiquetage et/ou découpage du produit ;
- le peigne à contre-couteaux comporte des contre-couteaux escamotables et/ou oscillants ;
- la vis de transfert comprend une première partie ayant un premier pas de vis s'étendant depuis une première des parois d'extrémité de la benne opposée à l'orifice de distribution et une seconde partie ayant un second pas de vis opposé au premier qui s'étend dans le prolongement de la première partie jusqu'à une seconde des parois d'extrémités, la zone de jonction desdites première et seconde parties étant située avantageusement en regard de la porte articulée ;
- la vis de transfert comprend un moyen structurel disposé entre ces première et seconde parties à pas inversés, pour empêcher l'enroulement du produit autour de ladite vis et assurer son évacuation vers le rotor de mélange ; le moyen en question est constitué par exemple de deux éléments tronconiques inversés accolés par leur grande base ou par deux organes d'éjection, en forme de plaque(s), agencés de part et d'autre de la vis. Ce moyen structurel est avantageusement disposé sur l'axe médian de la porte articulée ;
- la vis de transfert comprend un rotor de déchiquetage et/ou démêlage comportant une série de disques dentés, avantageusement en regard de la porte articulée ;
- le rotor de déchiquetage est séparé du reste de la vis de transfert par un élément tronconique.

L'invention sera encore détaillée à l'aide de la description suivante et des dessins, donnés à titre indicatif, et dans lesquels :
- la figure 1 est une vue arrière schématique, en coupe transversale, d'une réalisation d'une machine mélangeuse distributrice selon l'invention, avec une balle de fourrage cylindrique disposée sur la porte articulée de chargement, dans sa position d'ouverture ;
- la figure 2 est une vue arrière schématique, en coupe transversale, de la machine mélangeuse distributrice de la figure 1, avec la porte articulée de chargement dans sa position de fermeture ;

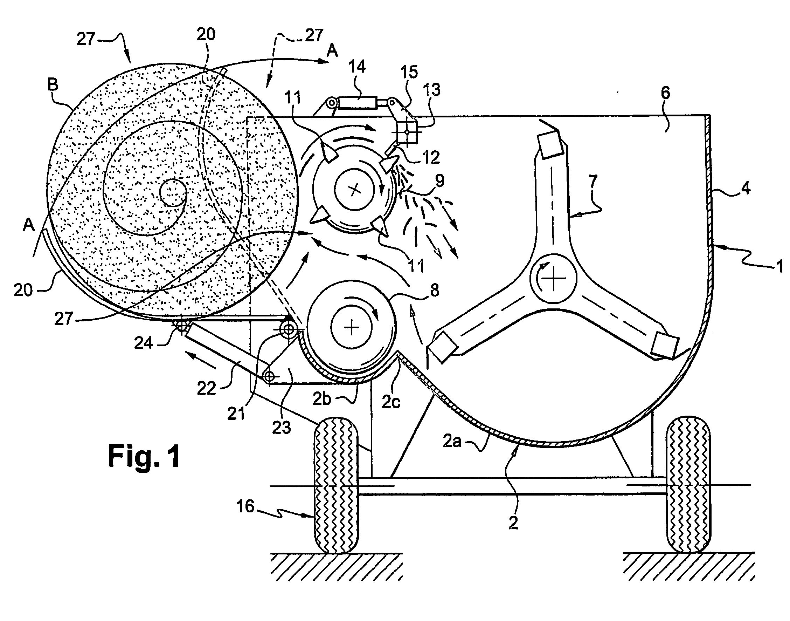

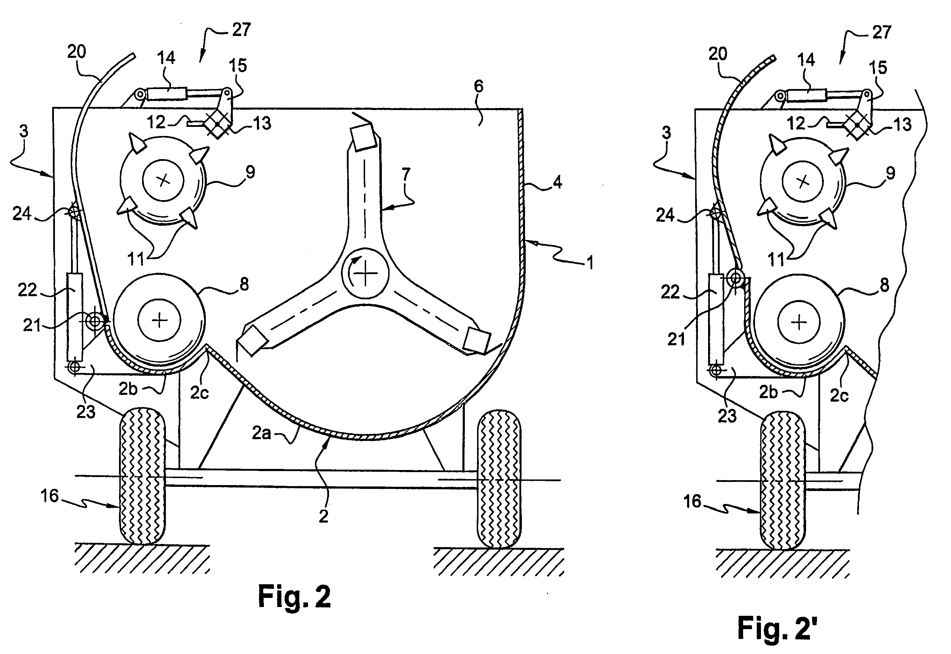

- la figure 2' est une vue arrière schématique partielle d'une variante de la machine mélangeuse distributrice des figures 1 et 2, montrant un agencement alternatif de l'axe d'articulation de la porte ;

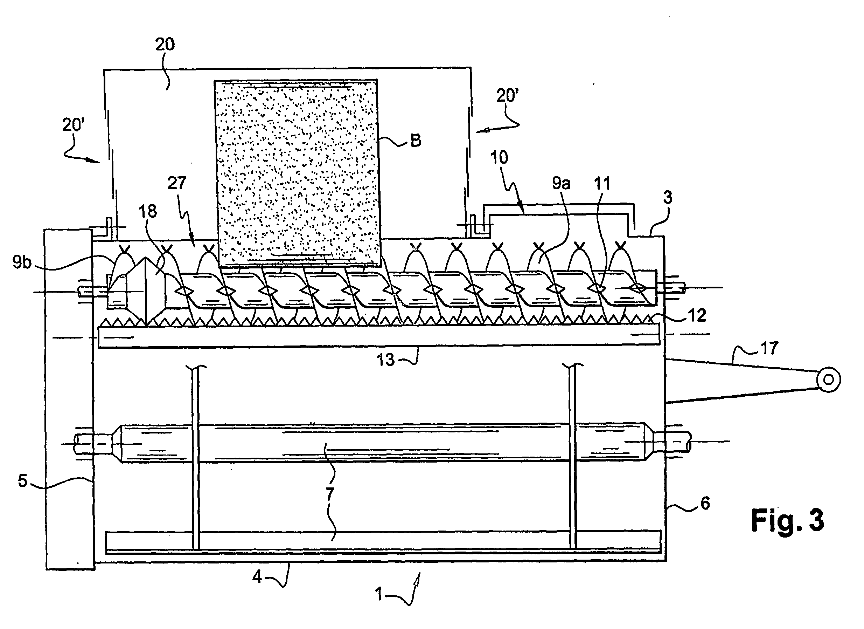

- la figure 3 est une vue schématique de dessus, d'une première réalisation d'une machine mélangeuse distributrice selon l'invention comportant une porte articulée de chargement de grande largeur ;

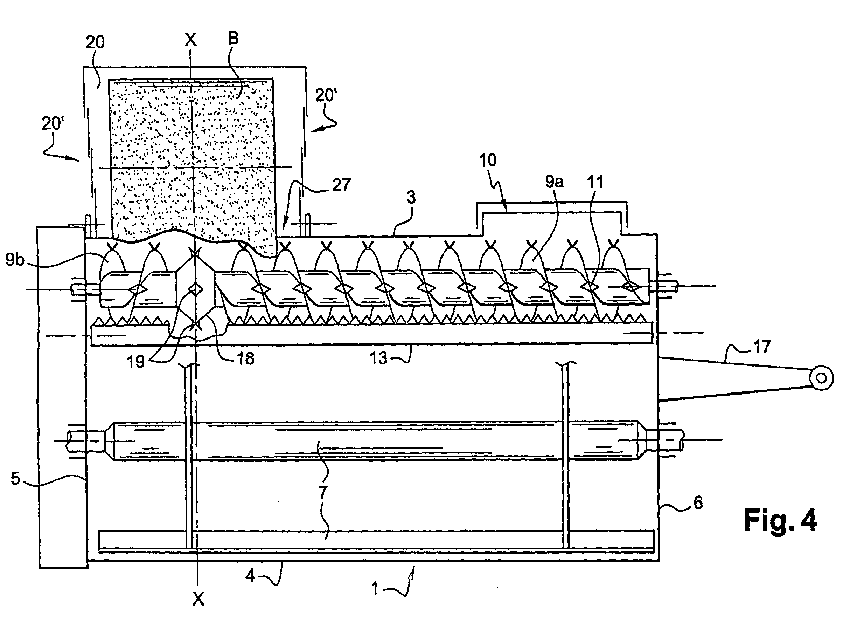

- la figure 4 est une vue schématique de dessus d'une seconde réalisation d'une machine mélangeuse distributrice selon l'invention comportant une porte articulée de chargement étroite ;

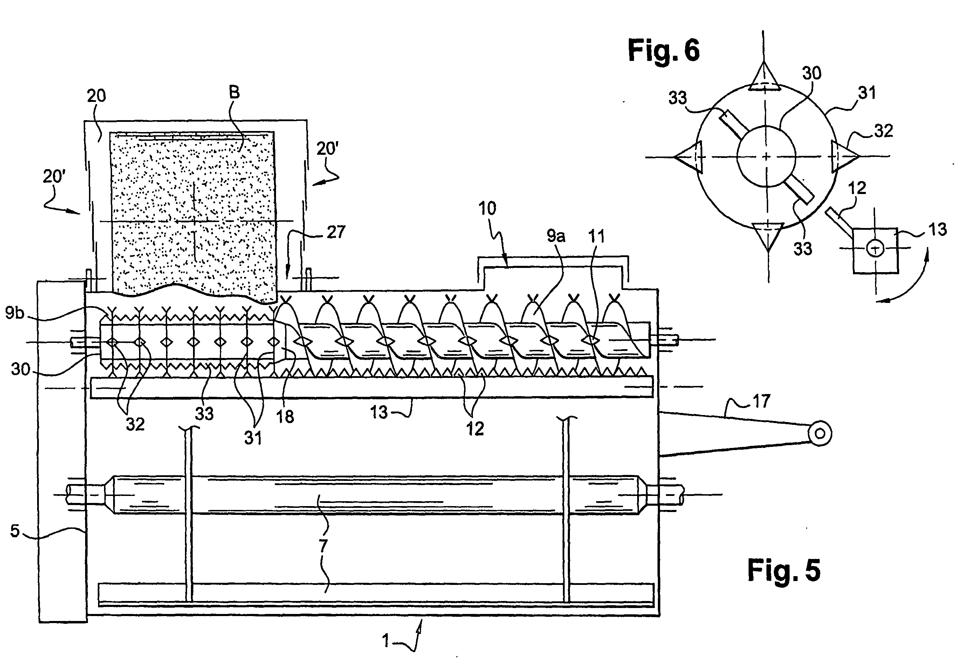

- la figure 5 est une vue schématique de dessus d'une troisième réalisation d'une machine mélangeuse distributrice selon l'invention avec une porte articulée de chargement étroite ;
- la figure 6 est une vue en bout de la partie de la vis de transfert située en regard de la porte articulée de chargement de la machine de la figure 5 ;

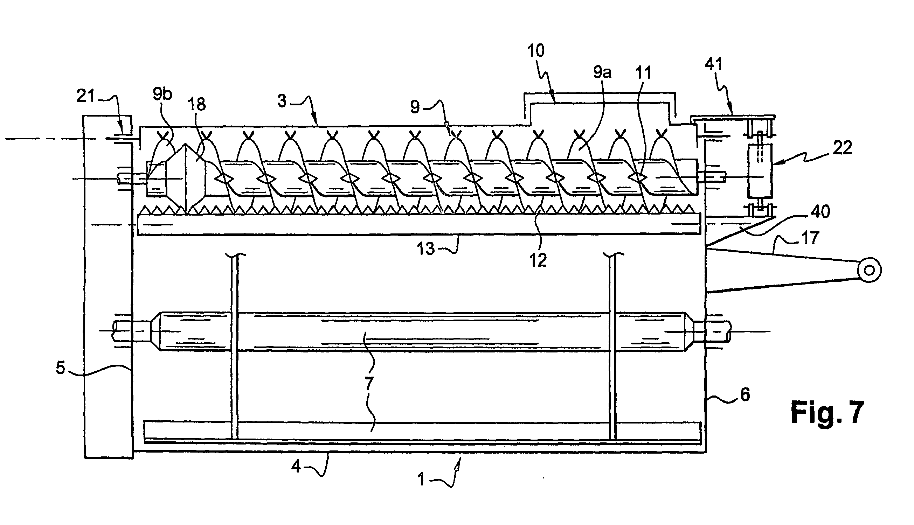

- la figure 7 est une vue schématique de dessus d'une quatrième réalisation d'une machine mélangeuse distributrice selon l'invention, dont la paroi latérale, à proximité des vis de distribution et de transfert, est montée articulée ;

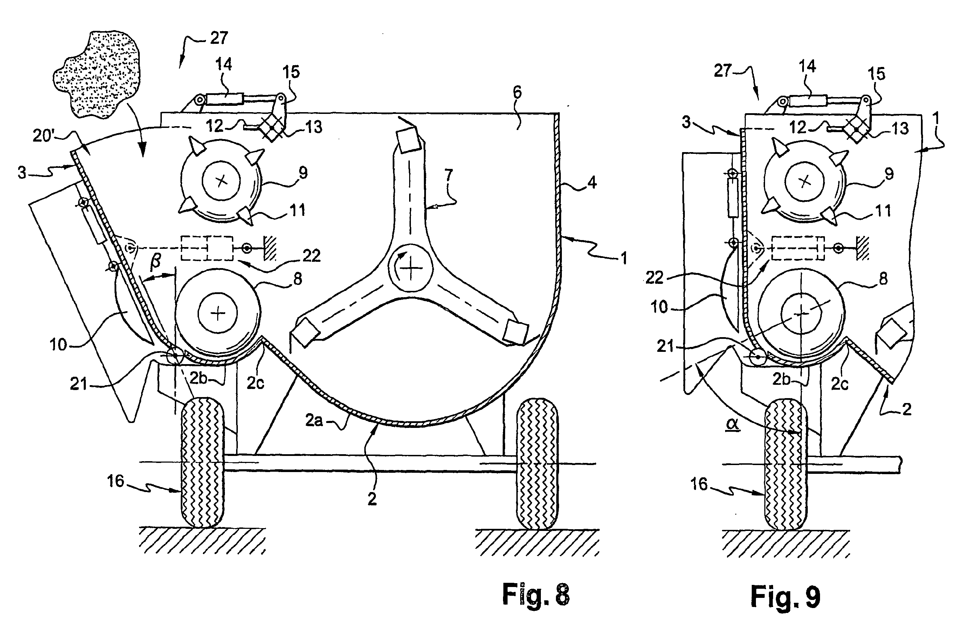

- la figure 8 est une vue arrière schématique, en coupe transversale, de la quatrième réalisation, montrant la paroi latérale en position d'ouverture ;
- la figure 9 est encore une vue arrière schématique, en coupe transversale, de la quatrième réalisation, avec la paroi latérale ici en position de fermeture ;

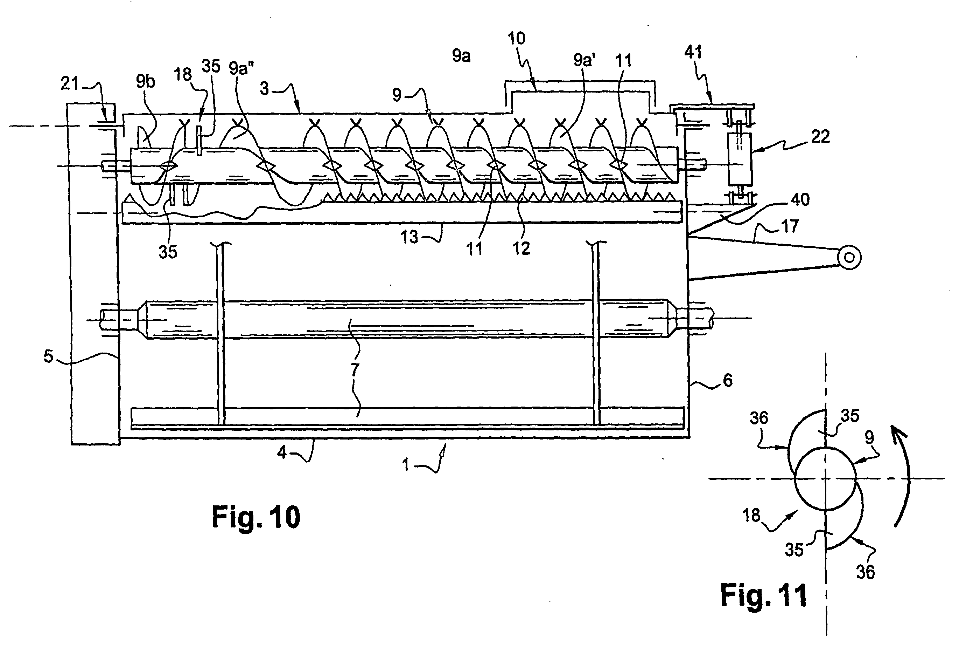

- la figure 10 est une vue schématique de dessus d'une machine mélangeuse distributrice selon l'invention, qui diffère de la réalisation de la figure 7 par la vis de transfert utilisée ; et
- la figure 11 est une vue schématique qui montre la vis de transfert de la machine illustrée figure 10, en coupe au niveau du moyen structurel de séparation.

Dans la description qui suit, ainsi que sur les dessins et afin de leur apporter plus de concision et de clarté, les mêmes chiffres de référence sont utilisés pour désigner des organes ou objets identiques d'une machine mélangeuse distributrice de produits pour l'alimentation du bétail.

La machine présentée est du type de celle qui est décrite dans le document EP-498 543 précité, et les parties utiles à la compréhension de l'invention sont détaillées ci-après.

Une machine selon l'invention est décrite sur les figures 1 à 3 et comprend une benne 1 en forme de cuve délimitée par un fond 2, par des parois latérales 3 et 4 et par des parois d'extrémité arrière 5 et avant 6.

Le fond 2 comprend deux parties 2a et 2b en forme d'auge de rayons différents. Le rayon de la partie 2b est de l'ordre de 3 à 4 fois inférieur à celui de la partie 2a et ces deux parties se rejoignent en formant une arête 2c. Le fond 2a constitue l'enveloppe partielle d'un rotor de mélange 7 qui s'étend longitudinalement entre les parois d'extrémité 5 et 6. La partie 2b du fond 2 enveloppe partiellement une vis 8 qui s'étend parallèlement au rotor de mélange 7, à proximité de l'une des parois latérales 3. Cette vis 8 a un diamètre qui est de 3 à 4 fois inférieur à celui du rotor 7 et sa périphérie supérieure se situe sensiblement au même niveau que l'axe du rotor 7.

Une seconde vis 9, dite vis de transfert, s'étend au-dessus de la vis 8, parallèlement, et aussi à proximité de la paroi latérale 3 ; cette vis a un diamètre qui correspond sensiblement à celui de la vis 8.

Le rotor 7 réalise un brassage et le mélange des produits disposés dans la benne 1. Il propulse les produits vers la vis 8. Cette vis 8 déplace les produits d'une extrémité à l'autre de la benne, de l'arrière vers l'avant par exemple, pour effectuer un recyclage et un mélange en circuit fermé. Cette vis 8 permet également de réaliser la distribution du produit par l'intermédiaire d'une trappe de distribution 10 adaptée, ménagée au niveau du fond 2b et de la paroi 3 de la benne 1.

La vis supérieure de transfert 9 tourne dans le même sens que la vis de mélange 8, mais le pas de son hélice est inversé. Cette vis 9 réalise un transfert des produits de l'avant vers l'arrière, par exemple à l'inverse de la vis 8, pour faire circuler les produits dans la benne et améliorer le mélange.

Cette machine permet de réaliser le mélange d'aliments de toute sorte et elle peut aussi recevoir des produits du genre paille ou foin.

La vis de transfert 9 est équipée de couteaux 11 qui coopèrent avec des dents 12 formant des contre-couteaux disposées sur un support 13 faisant office de poutre mobile. Bien que la section de cette poutre soit représentée carrée, elle peut avoir toute autre forme et par exemple être ronde ou triangulaire. Cette vis de transfert 9 réalise alors, en même temps que le transfert ou recyclage des produits, le déchiquetage de la paille ou de foin qui est introduit par une ouverture de chargement 27 adaptée.

La poutre 13 peut être actionnée au moyen d'un vérin 14 et d'une biellette 15, depuis une position dite « active », représentée à la figure 1, position dans laquelle les couteaux 11 coopèrent avec les dents 12 disposées sur la poutre 13, jusqu'à et une position dite « inactive » représentée à la figure 2, dans laquelle les contre-couteaux 12 ne coopèrent plus avec les couteaux 11, et inversement.

La poutre 13 est située dans la benne 1 sensiblement à l'intersection d'un plan vertical tangent à la périphérie de la vis de transfert 9, du côté du rotor de mélange 7 et d'un plan horizontal tangent à la périphérie supérieure de ladite vis de transfert 9.

Comme cela est connu en soi, les couteaux 11 de la vis de transfert sont, de préférence, en forme de section et disposés par couples, formant ainsi un Vé, chaque couple coopérant avec une dent 12, en forme de Vé complémentaire.

On notera ici que la poutre 13 qui porte les contre-couteaux 12, et ses moyens de manoeuvre 14, 15, peuvent être montés sur un bâti articulé autour de l'axe de la vis de transfert 9, ledit bâti étant muni de ses propres moyens de manoeuvre du type vérin. On obtient ainsi un ensemble « oscillant » qui offre la possibilité de faire varier le positionnement « actif » des contre-couteaux 12 sur un secteur circulaire, de manière à permettre l'adaptation du secteur de coupe de la balle B selon les besoins.

Selon cette première réalisation, la paroi latérale 3, à proximité des vis de distribution 8 et de transfert 9, comporte un tronçon 20 de sa longueur monté articulé, constituant une sorte de porte dans la paroi latérale 3 associée.

Comme on le voit sur les figures 1 et 2, cette porte 20 est fixée au niveau de son extrémité inférieure, au moyen d'une charnière 21, à la partie 2b du fond 2 de la benne 1. L'axe de la charnière 21 est parallèle à l'axe de la vis de transfert 9, et il est aménagé ici au niveau d'un plan horizontal passant par l'axe de rotation de la vis de distribution 8.

Selon une alternative représentée sur la figure 2', l'axe de la charnière 21 se situe dans la zone de jonction entre la partie 2b du fond 2 et la paroi latérale 3 de la benne 1, cela sensiblement dans un plan horizontal tangent à la périphérie supérieure de la vis de distribution 8. La partie 2b du fond 2 enveloppe ainsi convenablement la vis de transfert 8, quelle que soit la position ouverte/fermée de la porte 20 détaillée par la suite.

Plus généralement, l'axe de la charnière 21 se situe de préférence entre le plan horizontal passant par l'axe de rotation de la vis de distribution 8 (figure 2) et le plan horizontal tangent à la périphérie supérieure de la même vis de distribution 8 (figure 2').

Un vérin 22 est réuni à pivotement par une première de ses extrémités à un flasque 23 lui-même solidaire de la partie 2b du fond 2 de la benne, cependant que l'extrémité libre du piston 24 du vérin 22 est réuni à pivotement à la porte 20. Le vérin 22 peut être un vérin hydraulique ou pneumatique, actionné manuellement ou automatiquement. Il peut avoir un fonctionnement continu ou pas à pas.

Comme le montrent les figures 1 à 3, la porte articulée 20 constitue un dispositif de chargement de la benne 1, apte à recevoir une balle entière de fourrage B, notamment cylindrique.
Pour cela, la porte de chargement 20 a de préférence une forme arquée de manière à bien maintenir la balle, en particulier une balle cylindrique.
Cette forme arquée de la porte a également un rôle de canalisation et de recyclage du produit dans la benne, lorsqu'elle est en position fermée.

En pratique, lorsque la porte 20 est dans sa position d'ouverture (figures 1 et 3), cette porte 20 s'étend horizontalement ou au moins sensiblement horizontalement, de manière à pouvoir y placer une balle entière de fourrage B ; la paroi latérale 3 définit alors une grande ouverture de chargement latérale 27 (cette ouverture de chargement s'étend depuis l'extrémité de la porte 20 jusqu'à la poutre 13). Ensuite, une fois la machine mise en route, on fait pivoter la porte 20 dans le sens de la flèche AA, de sorte à amener progressivement la balle B contre la vis de transfert 9, au travers de l'ouverture de chargement latérale 27. Sous l'action de la vis de transfert 9, le fourrage est déchiqueté et découpé progressivement puis mélangé avec d'autres produits notamment par le rotor 7, et acheminé vers l'orifice de distribution 10 au moyen du rotor 7 et de la vis 8.

Le pivotement de la porte 20 sous l'action du vérin 22 se poursuit jusqu'à ce que la totalité de la balle ait été déchiquetée et que ladite porte se trouve dans sa position finale de fermeture représentée sur les figures 2 et 2'. Dans cette position, la porte 20 constitue une partie de la paroi latérale 3 de la benne 1 ; dans cette position fermée, la benne 1 est susceptible d'être chargée de produits en vrac par une petite ouverture de chargement 27, située alors juste au-dessus de la vis de transfert 9.

Le déplacement de la porte articulée 20 au moyen du vérin 22 peut être adapté de manière à régler le débit de coupe de la balle. Si on souhaite charger la benne par fourchées de produits, la porte articulée 20 peut être déplacée seulement jusqu'à une position d'ouverture intermédiaire, comme illustré en pointillés sur la figure 1. Dans ce cas, on accroît le calibre de l'orifice de chargement 27 par le dessus de la benne 1, ce qui permet d'augmenter le poids et le volume de chaque fourchée de produits.

Comme le montrent les figures 1 et 2, la benne 1 peut être montée sur un châssis à roues 16. Un élément d'attelage 17 (figure 3) peut être prévu à l'extrémité avant de la benne permettant ainsi son attelage à un tracteur.

En se référant à la figure 3, on remarque que la porte articulée de chargement 20 a une largeur relativement importante.
En effet, dans cette réalisation, la porte articulée 20 s'étend dans la paroi latérale 3 de la benne 1, d'un endroit proche de la paroi d'extrémité arrière 5, jusqu'à proximité de la trappe de distribution 10. Ce type de porte large peut autoriser la réception de plusieurs balles de fourrage juxtaposées ; elle permet également le chargement de grandes quantités de produits en vrac, et aussi l'utilisation de godets de chargement de grande largeur, aussi bien en position d'ouverture complète à l'horizontale que dans une position d'ouverture intermédiaire.

Egalement, sur la figure 3, on a représenté une première réalisation d'une vis de transfert 9. La vis de transfert 9 représentée sur cette figure est une vis comportant deux parties 9a, 9b séparées par un élément 18 constitué de deux cônes inversés accolés par leur plus grande base. La première partie 9a de la vis de transfert 9, qui constitue la majeure partie de cette vis, s'étend depuis l'élément de séparation 18 jusqu'à l'extrémité de la vis située près de la paroi d'extrémité avant 6 de la benne 1. La partie 9b s'étend elle depuis l'élément de séparation 18 jusqu'à proximité de la paroi d'extrémité arrière 5 de la benne. Les parties 9a et 9b ont des hélices de pas inverses.

L'emploi d'une vis de transfert 9 à deux parties, de pas contraires, permet d'éviter l'accumulation du produit au niveau de la paroi d'extrémité 5 de la benne ; et l'élément de séparation 18 en forme de deux cônes assemblés par leur grande base permet d'éviter l'enroulement du fourrage sur la vis au niveau de la jonction des deux parties de vis 9a et 9b, les deux éléments coniques correspondants assurant l'évacuation du fourrage vers le rotor de mélange 7.

Sur la figure 3, on a également représenté schématiquement les flancs latéraux 20' en écailles de la porte 20. Ces flancs 20' en écailles assurent le maintien du produit sur la porte 20 et empêchent les pertes de produits par les côtés de la porte 20 ; ils se présentent sous la forme de plaques métalliques assemblées et articulées entre elles pour permettre leur déployage et leur repliage en fonction des mouvements de la porte articulée. Tout autre moyen d'obturation latéral peut être envisagé. Cette benne 1 est ainsi particulièrement étanche, quelle que soit la position de la porte 20 (fermée, partiellement ouverte ou totalement ouverte) ; cela permet de poursuivre les opérations de mélange, et le cas échéant de déchiquetage, quel que soit le degré d'ouverture de la porte.

La figure 4 est une vue de dessus d'une autre réalisation de la benne selon l'invention. La benne 1 de la figure 4 diffère essentiellement de celle décrite précédemment en ce que la porte articulée latérale 20 est de conception étroite. Cette porte 20 toujours située à proximité de la paroi d'extrémité arrière 5 de la benne ne s'étend que sur une courte distance, légèrement supérieure à la largeur classique d'une balle de fourrage B, et ici approximativement égale au tiers de la longueur totale de la benne 1. Par ailleurs, la vis de transfert 9 dans cette réalisation est légèrement modifiée par rapport à celle décrite précédemment en liaison avec la figure 3. Dans cette réalisation, l'élément de séparation 18 des parties de vis 9a et 9b est disposé sensiblement sur l'axe médian XX de la porte 20. Il est en outre pourvu à sa périphérie de couteaux 19 semblables aux couteaux 11 décrits précédemment pour qu'il participe à l'action de déchiquetage et/ou de découpe.
Ici encore, l'élément de séparation 18 évite l'enroulement du fourrage sur la vis 9 et assure l'évacuation du fourrage vers le rotor de mélange 7. D'autre part, les deux parties de vis 9a et 9b de pas contraire, séparées par cet organe 18 centré sur l'axe médian XX de la porte 20, permettent d'équilibrer les forces de déplacement longitudinales de la balle B ; la balle B est en conséquence correctement centrée en permanence sur la porte 20.

La figure 5 est une vue de dessus d'une autre réalisation de la benne 1 selon l'invention, qui diffère essentiellement de la réalisation de la figure 4 par la vis de transfert 9 utilisée. La vis de transfert 9 est ici une vis de transfert en deux parties séparées par un seul élément tronconique 18 : une partie 9a semblable à celle de la vis de la figure 4, et une partie 9b constituant un rotor de déchiquetage et/ou démêlage.
Comme on le voit sur cette figure 5, la partie de démêlage 9b est située en regard de la porte de chargement 20 et s'étend pratiquement sur la totalité de la largeur de cette porte. Cette partie de démêlage 9b, comme on le voit sur les figures 5 et 6, se compose d'une âme cylindrique 30 supportant une série de disques 31 espacés les uns des autres (généralement de 200 mm) portant à leur périphérie plusieurs couteaux 32 qui peuvent être analogues aux couteaux 11 précités.
Entre ces disques 31, sont disposées une ou plusieurs palette(s) 33 assurant l'éjection du produit.

Comme le montrent les figure s 5 et 6, les couteaux 32 des disques 31 coopèrent avec des dents 12 de la poutre porte-couteaux 13.

L'élément tronconique de séparation 18 est accolé par sa plus grande base à un disque 31 et assure la même fonction que précédemment, en ce sens qu'il évite l'enroulement du fourrage sur la vis 9 en assurant son évacuation vers le rotor 7.

Les figures 7 à 9 illustrent encore une autre réalisation d'une benne 1 selon l'invention. La benne 1 correspondante est ici similaire à celle décrite précédemment en relation avec les figures 1 à 3.
On retrouve en particulier une vis de transfert 9 comportant deux parties 9a et 9b séparées par un élément 18 constitué de deux cônes inversés, accolés par leur plus grande base. En revanche, elle en diffère essentiellement de par la structure de la paroi latérale 3, située à proximité des vis de distribution 8 et de transfert 9.

Comme on l'observe sur les figures 7 à 9, cette paroi latérale 3, équipée de la trappe de vidange 10, est ici montée pivotante sur toute sa longueur au niveau de son extrémité inférieure, sur la partie 2b du fond 2 enveloppant la vis de distribution 8 autour d'un axe d'articulation 21 parallèle à la vis de transfert 9. Cet axe d'articulation 21 est aménagé dans un secteur d'angle α de l'ordre de 70°, qui s'étend vers la paroi latérale 3 à partir du plan vertical passant par l'axe de la vis de distribution 8.

Toute la paroi latérale 3 forme ici la porte mobile latérale de la benne. Au niveau des deux parois d'extrémités 5 et 6, on retrouve encore dans cette réalisation des flancs latéraux 20' aptes à se déployer ou se replier en fonction des mouvements de la paroi 3.

Le vérin de manoeuvre 22 de la paroi latérale 3 est ici monté en regard de la face externe de la paroi d'extrémité avant 6 de la benne. Il est réuni à pivotement par l'une de ses extrémités à un flasque 40 solidaire de la face externe de la paroi avant 6, et l'extrémité de la tige de vérin 22 est réunie à pivotement à un prolongement 41 de la paroi latérale 3, s'étendant en regard du flasque 40.

Selon cette réalisation, la paroi latérale 3 a une possibilité de mouvement limitée, vers l'extérieur, dans un domaine d'angle β de l'ordre de 45° par rapport à la verticale. La position d'ouverture de cette paroi latérale 3 (figure 8) correspond alors sensiblement à la position intermédiaire décrite précédemment en relation avec la figure 1. Dans cette position, le calibre de l'ouverture de chargement 27 par le dessus de la benne 1 est accru, par rapport à celui de sa position fermée quasi verticale, tel que représenté sur la figure 9.
Lorsque la paroi 3 est dans sa position d'ouverture, les opérations de chargement de la benne sont facilitées, et le poids de chaque fourchée peut être augmenté. Bien entendu, cette benne 1 peut également être chargée lorsque la paroi latérale 3 est dans sa position de fermeture (figure 9), l'ouverture de chargement 27 étant alors de calibre classique.

Bien entendu encore, le vérin de commande 22 peut également être agencé de manière à permettre un mouvement de la paroi latérale 3 jusqu'à une position d'ouverture horizontale ou au moins sensiblement horizontale, cela pour créer une ouverture de chargement latérale permettant la dépose d'au moins une balle entière B sur ladite paroi latérale 3, comme décrit précédemment en relation avec les figures 1 à 3.

Cette benne 1 reste particulièrement étanche quelle que soit la position, ouverte, partiellement ouverte ou fermée, de la paroi latérale 3, notamment du fait de la présence des flancs latéraux 20'. Le mélange et éventuellement le déchiquetage des produits peut ainsi se poursuivre même en position de paroi 3 ouverte ou partiellement ouverte.

La figure 10 est une vue de dessus d'une autre réalisation de la benne 1 selon l'invention. Cette réalisation diffère essentiellement de la réalisation de la figure 7 du fait de la structure de la vis de transfert 9 utilisée.

La vis de transfert 9 en question comprend deux parties de vis 9a et 9b, à pas d'hélice inversé, entre lesquelles est agencé le moyen structurel de séparation 18, comme décrit précédemment en relation avec les figures 3 et 4.
La partie 9a de la vis de transfert 9, s'étendant depuis l'élément de séparation 18 jusqu'à l'extrémité de la vis près de la paroi d'extrémité avant 6 de la benne 1, comprend - un premier tronçon 9a' situé à distance de l'élément de séparation 18 et de pas d'hélice constant, et - un second tronçon 9a" proximal à l'élément de séparation 18 et de pas d'hélice supérieur au premier tronçon 9a' précité. La partie 9b, agencée entre l'élément de séparation 18 et la paroi d'extrémité arrière 5 de la benne 1, a quant à elle un pas de vis similaire à celui du second tronçon 9a" de la vis de transfert 9.

L'élément de séparation 18 est ici constitué par deux organes d'éjection 35, en forme de plaques, s'étendant perpendiculairement à l'axe de la vis de transfert 9. Ces deux organes d'éjection 35 sont agencés de part et d'autre de la vis de transfert 9, décalés l'un par rapport à l'autre sur la longueur de ladite vis.
Comme on le voit sur la figure 11, ces deux organes d'éjection 35 ont chacun une bordure active 36 de forme générale courbe ou elliptique ; ils évitent l'enroulement du fourrage sur la vis 9 et assurent l'évacuation du fourrage vers le rotor de mélange 7. Cette évacuation est encore facilitée par le pas d'hélice élevé des parties 9a" et 9b de la vis de transfert 9.

Bien entendu, cette vis de transfert 9 peut tout-à-fait remplacer celle équipant les bennes munies d'une porte 20, tel que décrit précédemment en relation avec les figures 1 à 6.

Plus généralement, la présente machine mélangeuse distributrice peut aussi être mise en oeuvre pour le mélange et le déchiquetage de tout autre produit, par exemple pour la réalisation de compostage (mélange de boues de stations d'épuration et de déchets verts), pour la préparation d'un mélange de semences de gazon avec du terreau et de l'engrais, ou autre ...

## Revendications

1. Machine mélangeuse distributrice, en particulier de produits pour l'alimentation du bétail comprenant notamment de la paille et/ou du foin, constituée d'une benne (1) munie d'un fond (2) qui s'étend entre des parois latérales (3, 4) et des parois d'extrémités arrière et avant (5, 6), lequel fond (2) enveloppe partiellement d'une part, un rotor de mélange (7) de grand diamètre s'étendant longitudinalement jusqu'aux parois d'extrémités (5, 6) et, d'autre part, une vis sans fin de distribution (8) s'étendant parallèlement audit rotor (7) pour déplacer lesdits produits d'une extrémité à l'autre du fond (2), en allant vers une trappe de distribution (10) qui est aménagée sur l'une desdites parois latérales à proximité d'une des parois d'extrémités de la benne, et, disposée longitudinalement au-dessus de la vis de distribution (8), une vis de transfert (9) qui, d'une part, déplace les produits longitudinalement dans la benne (1) selon un sens inverse à celui induit par la vis de distribution (8) et qui, d'autre part, comporte des moyens (11) pour déchiqueter et/ou découper les produits, lesquelles vis de distribution (8) et de transfert (9) sont agencées à proximité de l'une des parois latérales (3) de la benne (1), du côté de l'ouverture de chargement (27) des produits, **caractérisée en ce qu'**elle comporte une paroi latérale (3), à proximité de laquelle se trouvent la vis de distribution (8) et la vis de transfert (9), dont au moins un tronçon (3, 20) de sa longueur est manoeuvrable en pivotement, par le biais d'un moyen de commande (22), entre une position de fermeture dans laquelle ledit tronçon (3, 20) constitue au moins une partie de ladite paroi latérale (3), et une position d'ouverture dans laquelle l'ouverture de chargement (27) de la benne (1) est augmentée, lequel tronçon mobile (3, 20) est muni de flancs latéraux (20') aptes à se déployer ou à se replier en fonction respectivement de la position ouverte ou fermée dudit tronçon (3, 20).

2. Machine selon la revendication 1, **caractérisée en ce qu'**elle comporte un tronçon articulé (20) constituant une sorte de porte aménagée dans la longueur de la paroi latérale (3), lequel tronçon (20) est monté pivotant au niveau de sa bordure inférieure sur ladite paroi latérale (3) autour d'une charnière (21) s'étendant parallèlement à l'axe de la vis de transfert (9).

3. Machine selon la revendication 2, **caractérisée en ce que** la porte (20) est disposée à l'extrémité arrière de la benne (1).

4. Machine selon l'une quelconque des revendications 2 ou 3, **caractérisée en ce que** la porte (20) s'étend depuis la paroi d'extrémité arrière (5) de la benne (1) jusqu'à la trappe de distribution (10).

5. Machine selon l'une quelconque des revendications 2 ou 3, **caractérisée en ce que** la porte (20) a une largeur légèrement supérieure à celle d'une balle entière de fourrage (B).

6. Machine selon la revendication 1, **caractérisée en ce qu'**elle comporte une paroi latérale (3) montée pivotante au niveau de sa bordure d'extrémité inférieure, sur la partie (2b) du fond (2) enveloppant la vis de distribution (8), autour d'un axe d'articulation (21) parallèle à la vis de transfert (9).

7. Machine selon l'une quelconque des revendications 1 à 6, **caractérisée en ce qu'**elle comporte une paroi latérale (3) dont au moins un tronçon (3, 20) de sa longueur est mobile depuis une position d'ouverture dans laquelle ledit tronçon (3, 20) est apte à recevoir le produit, en particulier sous la forme d'une balle entière de fourrage (B), jusqu'à une position de fermeture dans laquelle pratiquement la totalité du produit a été déchiquetée et/ou découpée par la vis de transfert (9).

8. Machine selon la revendication 7, **caractérisée en ce que** le tronçon mobile (3, 20) comprend une surface de réception de la balle (B) de forme arquée.

9. Machine selon l'une quelconque des revendications 1 à 8, **caractérisée en ce que** le moyen de commande (22) du tronçon articulé (3, 20) est un vérin hydraulique.

10. Machine selon l'une quelconque des revendications 1 à 9, **caractérisée en ce que** le tronçon mobile (3, 20) comporte des flancs latéraux (20') en écailles sur tout ou partie de ses côtés.

11. Machine selon l'une quelconque des revendications 1 à 10, **caractérisée en ce qu'**elle comprend un peigne à contre-couteaux (12, 13) coopérant avec la vis de transfert (9) en vue du déchiquetage et/ou découpage du produit.

12. Machine selon la revendication 11, **caractérisée en ce que** le peigne à contre-couteaux (12, 13) comporte des contre-couteaux escamotables et/ou oscillants.

13. Machine selon l'une quelconque des revendications 1 à 5, **caractérisée en ce que** la vis de transfert (9) comprend une première partie (9a) ayant une premier pas de vis s'étendant depuis une première des parois d'extrémités, prolongée par une seconde partie (9b) ayant un second pas de vis, opposé au premier, s'étendant jusqu'à une seconde des parois d'extrémité.

14. Machine selon la revendication 13, **caractérisée en ce que** la vis de transfert (9) comprend un moyen structurel (18) disposé entre la première et la seconde partie (9a, 9b) de la vis de transfert (9) pour empêcher l'enroulement du produit autour de ladite vis (9) et assurer son évacuation.

15. Machine selon la revendication 14, **caractérisée en ce que** le moyen structurel (18) est constitué de deux éléments tronconiques inversés accolés par leur grande base.

16. Machine selon la revendication 14, **caractérisée en ce que** le moyen structurel (18) est constitué de deux organes d'éjection (35) agencés de part et d'autre de la vis de transfert (9), et décalés l'un par rapport à l'autre sur sa longueur, lesquels organes d'éjection (35) ont chacun une bordure active (36) de forme générale courbe ou elliptique.

17. Machine selon l'une quelconque des revendications 14 à 16, **caractérisée en ce que** le moyen (18) est centré sur l'axe médian XX de la porte (20).

18. Machine selon l'une quelconque des revendications 1 à 5, **caractérisée en ce que** la vis de transfert (9) comprend un rotor de déchiquetage et/ou démêlage (9b) comportant une série de disques dentés (31).

19. Machine selon la revendication 18, **caractérisée en ce que** le rotor de déchiquetage et/ou démêlage (9b) est séparé du reste de la vis de transfert par un élément tronconique (18).

20. Machine selon la revendication 19, **caractérisée en ce que** l'élément tronconique (18) est accolé par sa grande base à un disque (31).

## Claims

1. A machine for mixing and distributing, in particular products used for feeding livestock comprising notably straw and/or hay, composed of a container (1) fitted with a bottom (2) which extends between lateral walls (3, 4) and rear and front end walls (5, 6), which bottom (2) surrounds partially on the one hand, a large-diameter mixing rotor (7) extending longitudinally up to the end walls (5, 6) and on the other hand, a feed endless screw (8) extending parallel to said rotor (7) designed for moving said products from one end to the other end of the bottom (2), going towards a feeding trapdoor (10) which is provided on one of said lateral walls, close to one of the lateral walls of the container and, arranged longitudinally above the feed screw (8), a transfer screw (9) which, on the one hand, moves the products longitudinally in the container (1) along a direction opposite to that induced by the feed screw (8) and which, on the other hand, comprises means (11) for shredding and/or cutting the products, which feed screw (8) and transfer screw (9) are arranged close to one of the lateral walls (3) of the container (1), on the side comprising the product-load opening (27), **characterised in that** it comprises a side wall (3), close to which the feed screw (8) and the transfer screw (9) are situated, whereof at least one segment (3, 20) of its length can be operated pivotally, via a control mean (22) between a closed position wherein said segment (3, 20) forms at least one portion of said lateral wall (3), and an open position wherein the load opening (27) of the container (1) is increased, which mobile segment (3, 20) is fitted with lateral flanks (20') capable of being deployed or collapsed relative to the open or closed position of said segment (3, 20) respectively.

2. A machine according to claim 1, **characterised in that** it comprises a hinged segment (20) forming a kind of door provided in the length of the lateral wall (3), which segment (20) is mounted rotatably at the lower border thereof on said lateral wall (3) around a hinge (21) extending parallel to the axis of the transfer screw (9).

3. A machine according to claim 2, **characterised in that** the door (20) is provided at the rear end of the container (1).

4. A machine according to any of the claims 2 or 3, **characterised in that** the door (20) extends from the rear end wall (5) of the container (1) up to the feeding trapdoor (10).

5. A machine according to any of the claims 2 or 3, **characterised in that** the width of the door (20) is slightly greater than that of a whole bale of feedstock (B).

6. A machine according to claim 1, **characterised in that** it comprises a lateral wall (3) mounted rotatably at the lower border thereof, on the portion (2b) of the bottom (2) surrounding the feed screw (8), around a hinge axis (21) parallel to the transfer screw (9).

7. A machine according to any of the claims 1 to 6, **characterised in that** it includes a lateral wall (3) whereof at least one segment (3, 20) of its length is mobile from an opening position wherein said segment (3, 20) is capable of receiving the product, in particular in the form of a whole bale of feedstock (B), up to a closing position wherein practically the whole product has been shredded and/or cut by the transfer screw (9).

8. A machine according to claim 7, **characterised in that** the mobile segment (3, 20) comprises an arched surface for receiving the bale (B).

9. A machine according to any of the claims 1 to 8, **characterised in that** the control means (22) of the hinged segment (3, 20) is a hydraulic jack.

10. A machine according to any of the claims 1 to 9, **characterised in that** the mobile segment (3, 20) comprises scaly lateral flanks (20') all over or partially over the sides thereof.

11. A machine according to any of the claims 1 to 10, **characterised in that** it comprises a comb with counter-knives (12, 13) co-operating with the transfer screw (9) in view of shredding and/or cutting the product.

12. A machine according to claim 11 **characterised in that** the comb with counter-knives (12, 13) includes retractable and/or oscillating counter-knives.

13. A machine according to any of the claims 1 to 5, **characterised in that** the transfer screw (9) comprises a first section (9a) having a first thread pitch extending from a first one of the end walls, prolonged by a second section (9b) having a second thread pitch, opposite to the first one, extending up to a second one of the end alls.

14. A machine according to claim 13, **characterised in that** the transfer screw (9) comprises a structural mean (18) arranged between the first and the second portions (9a, 9b) of the transfer screw (9) to prevent the product from winding around said screw (9) and to ensure the evacuation thereof.

15. A machine according to claim 14, **characterised in that** the structural means (18) is formed of two reverted truncated cone elements abutting against one another by the larger base thereof.

16. A machine according to claim 14, **characterised in that** the structural means (18) is formed of two ejection members (35) arranged on both sides of the transfer screw (9) and offset relative to one another over the length thereof, which ejection members (35) each have an active border (36) generally curved or elliptic in shape.

17. A machine according to any of the claims 14 to 16, **characterised in that** the means (18) is centred on the median axis XX of the door (20).

18. A machine according to any of the claims 1 to 5, **characterised in that** the transfer screw (9) comprises a shredding and/or unravelling rotor (9b) comprising a serie of toothed discs (31).

19. A machine according to claim 18, **characterised in that** the shredding and/or unravelling rotor (9b) is separated from the rest of the transfer screw by a truncated cone element (18).

20. A machine according to claim 19, **characterised in that** the truncated cone element (18) abuts against a disc (31) by its larger base.

## Patentansprüche

1. Misch- und Verteilmaschine insbesondere für Viehfuttermittel, die insbesondere Stroh und/oder Heu enthalten, bestehend aus einem Kübel (1), der mit einem Boden (2) versehen ist, welcher sich zwischen den Seitenwänden (3, 4) und der hinteren und vorderen Stirnwand (5, 6) erstreckt, wobei der Boden einerseits teilweise einen sich in Längsrichtung bis zu den Stirnwänden (5, 6) erstreckenden Mischrotor (7) von großem Durchmesser und andererseits eine Verteilerschnecke (8) umschließt, die sich parallel zum genannten Rotor (7) erstreckt, um die genannten Futtermittel von einem zum anderen Ende des Bodens (2) zu transportieren, und zu einem Verteilerschacht (10) führt, der in eine der genannten Seitenwände in Nähe einer der Stirnwände des Kübels eingearbeitet ist, und längs über der Verteilerschnecke (8) angeordnet ist, eine Transportschnecke (9), die einerseits die Futtermittel im Kübel (1) in Längsrichtung entgegenlaufend zu der von der Verteilerschnecke (8) induzierten Richtung transportiert und andererseits Mittel (11) zum Zerreißen und/oder zum Zerschneiden der Futtermittel aufweist, wobei die Verteilerschnecke (8) und die Transportschnecke (9) in Nähe einer der Seitenwände (3) des Kübels (1) auf der Seite der Beschickungsöffnung (27) für die Futtermittel angeordnet sind, **dadurch gekennzeichnet, dass** sie eine Seitenwand (3) aufweist, in deren Nähe sich die Verteilerschnecke (8) und die Transportschnecke (9) befinden, von der mindestens ein Teilstück (3, 20) ihrer Länge durch ein Betätigungsmittel (22) zwischen einer geschlossenen Position, in welcher das genannte Teilstück (3, 20) mindestens einen Teil der genannten Seitenwand (3) bildet, und einer geöffneten Position, in der die Beschickungsöffnung (27) des Kübels (1) vergrößert wird, schwenkbar bewegt werden kann, wobei dieses bewegliche Teilstück (3, 20) mit Seitenflanken (20') versehen ist, die je nach geöffneter oder geschlossener Position des genannten Teilstücks (3, 20) auseinander fahren oder sich zusammenschieben können.

2. Maschine nach Anspruch 1, **dadurch gekennzeichnet, dass** sie ein beweglich gelagertes Teilstück (20) besitzt, das eine Art von in die Länge der Seitenwand (3) eingearbeiteter Klappe bildet, wobei das Teilstück (20) mit seinem unteren Rand an der genannten Seitenwand (3) schwenkbar um ein Scharnier (21) montiert ist, das sich parallel zur Achse der Transportschnecke (9) erstreckt.

3. Maschine nach Anspruch 2, **dadurch gekennzeichnet, dass** die Klappe (20) am hinteren Ende des Kübels (1) angeordnet ist.

4. Maschine nach einem der Ansprüche 2 oder 3, **dadurch gekennzeichnet, dass** die Klappe (20) sich von der hinteren Stirnwand (5) des Kübels (1) bis zum Verteilerschacht (10) erstreckt.

5. Maschine nach einem der Ansprüche 2 oder 3, **dadurch gekennzeichnet, dass** die Breite der Klappe (20) leicht über der des ganzen Futtermittelballens (B) liegt,

6. Maschine nach Anspruch 1, **dadurch gekennzeichnet, dass** sie eine Seitenwand (3) aufweist, die mit dem Rand ihres unteren Endes am Teil (2b) des die Verteilerschnecke (8) umschließenden Bodens (2) um eine Schwenkachse (21) parallel zur Transportschnecke (9) schwenkbar montiert ist.

7. Maschine nach einem der Ansprüche 1 bis 6, **dadurch gekennzeichnet, dass** sie eine Seitenwand (3) aufweist, von der sich mindestens ein Teilstück (3, 20) ihrer Länge von einer geöffneten Position, in der das genannte Teilstück (3, 20) das Futtermittel insbesondere in Form eines ganzen Futtermittelballens (B) aufnehmen kann, in eine geschlossene Position, in der praktisch das gesamte Futtermittel von der Transportschnecke (9) zerrissen und/oder zerschnitten worden ist, bewegen kann.

8. Maschine nach Anspruch 7, **dadurch gekennzeichnet, dass** das bewegliche Teilstück (3, 20) eine gebogenen Aufnahmefläche für den Ballen (B) aufweist.

9. Maschine nach einem der Ansprüche 1 bis 8, **dadurch gekennzeichnet, dass** das Betätigungsmittel (22) des beweglich gelagerten Teilstücks (3, 20) ein Hydraulikzylinder ist.

10. Maschine nach einem der Ansprüche 1 bis 9, **dadurch gekennzeichnet, dass** das bewegliche Teilstück (3, 20) Seitenflanken (20') in Überlappungen auf dem ganzen oder einem Teil seiner Seiten aufweist.

11. Maschine nach einem der Ansprüche 1 bis 10, **dadurch gekennzeichnet, dass** sie einen Kamm mit Gegenmessern (12, 13) besitzt, der mit der Transportschnecke (9) zum Zerreißen und/oder Zerschneiden des Futtermittels zusammenarbeitet.

12. Maschine nach Anspruch 11, **dadurch gekennzeichnet, dass** der Kamm mit Gegenmessern (12, 13) versenkbare und/oder hin- und herschwenkende Gegenmesser besitzt.

13. Maschine nach einem der Ansprüche 1 bis 5, **dadurch gekennzeichnet, dass** die Transportschnecke (9) einen ersten Teil (9a) mit einem sich von einer ersten Stirnwand aus erstreckenden Schraubengang aufweist, der durch einen zweiten Teil (9b) mit einem zweiten, am anderen Ende des ersten Schraubengangs liegenden Schraubengang verlängert ist, der sich bis zu einer zweiten Stirnwand erstreckt.

14. Maschine nach Anspruch 13, **dadurch gekennzeichnet, dass** die Transportschnecke (9) ein zwischen dem ersten und dem zweiten Teil (9a, 9b) der Transportschnecke (9) angeordnetes Bauelement (18) besitzt, um ein Umwickeln des Futtermittels um die genannte Schnecke (9) zu verhindern und dessen Abfuhr zu gewährleisten.

15. Maschine nach Anspruch 14, **dadurch gekennzeichnet, dass** das Bauelement (18) aus zwei umgekehrt mit ihrer Grundfläche aneinander gesetzten, kegelstumpfförmigen Bauteilen besteht.

16. Maschine nach Anspruch 14, **dadurch gekennzeichnet, dass** das Bauelement (18) aus zwei Auswerferorganen (35) besteht, die jeweils auf einer der beiden Seiten der Transportschnecke (9) angeordnet und in ihrer Längsrichtung zueinander versetzt sind, wobei diese Auswerferorgane (35) beide eine Arbeitskante (36) von allgemein gekrümmter oder elliptischer Form aufweisen.

17. Maschine nach einem der Ansprüche 14 bis 16, **dadurch gekennzeichnet, dass** das Element (18) zur Mittelachse XX der Klappe (20) zentriert ist.

18. Maschine nach einem der Ansprüche 1 bis 5, **dadurch gekennzeichnet, dass** die Transportschnecke (9) einen Reiß- und/oder Auflockerungsrotor (9b) besitzt, der eine Reihe von gezahnten Scheiben (31) aufweist.

19. Maschine nach Anspruch 18, **dadurch gekennzeichnet, dass** der Reiß- und/oder Auflockerungsrotor (9b) vom Rest der Transportschnecke durch ein kegelstumpfförmiges Element (18) getrennt ist.

20. Maschine nach Anspruch 19, **dadurch gekennzeichnet, dass** das kegelstumpfförmige Element (18) mit seiner Grundfläche an eine Scheibe (31) angesetzt ist.
